(19) Europäisches Patentamt
European Patent Office
Office européen des brevets

(11) **EP 3 325 334 B1**

(12) **EUROPÄISCHE PATENTSCHRIFT**

(45) Veröffentlichungstag und Bekanntmachung des Hinweises auf die Patenterteilung:
**11.09.2024 Patentblatt 2024/37**

(21) Anmeldenummer: **16750362.2**

(22) Anmeldetag: **12.07.2016**

(51) Internationale Patentklassifikation (IPC):
**B62K 19/36** *(2006.01)*    **B62J 1/08** *(2006.01)*

(52) Gemeinsame Patentklassifikation (CPC):
**B62J 1/08; B62K 19/36;** B62J 2001/085

(86) Internationale Anmeldenummer:
**PCT/AT2016/095001**

(87) Internationale Veröffentlichungsnummer:
**WO 2017/011848 (26.01.2017 Gazette 2017/04)**

(54) **POSITIONIERVORRICHTUNG MIT TELESKOPELEMENT UND STÜTZELEMENT**

POSITIONING DEVICE HAVING A TELESCOPING ELEMENT AND A SUPPORTING ELEMENT

DISPOSITIF DE POSITIONNEMENT À ÉLÉMENT TÉLESCOPIQUE ET ÉLÉMENT DE SUPPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2015 AT 4802015**

(43) Veröffentlichungstag der Anmeldung:
**30.05.2018 Patentblatt 2018/22**

(73) Patentinhaber: **Lupaan GmbH**
**4020 Linz (AT)**

(72) Erfinder: **EBERLBERGER, Lukas**
**4470 Enns (AT)**

(74) Vertreter: **Torggler & Hofmann Patentanwälte - Innsbruck**
**Torggler & Hofmann Patentanwälte GmbH & Co KG**
**Postfach 85**
**6020 Innsbruck (AT)**

(56) Entgegenhaltungen:
**EP-A1- 2 574 799          CN-U- 202 657 186**
**DE-A1- 102010 007 628     US-A1- 2011 204 201**
**US-A1- 2014 112 703**

**Beschreibung**

Die Erfindung betrifft eine Positioniervorrichtung - insbesondere für eine teleskopierbare Sattelstütze eines Fahrradrahmens nach dem Oberbegriff des Anspruches 1.

Weiters soll eine Anordnung aus einer teleskopierbare Sattelstütze und einem Fahrradrahmen mit einer Positioniervorrichtung mit den Merkmalen des Anspruches 10 angegeben werden.

Positioniervorrichtungen der eingangs genannten Art werden beispielsweise in der US 2009/0324327 gezeigt und weisen mehrere ineinander geschobene, teleskopierbare Elemente auf, die zueinander abgedichtet werden müssen. Diese Sattelstütze wird als Einheit in das Sattelrohr gesteckt und mit der Sattelklemme fixiert. Die Sattelklemme nimmt dabei sämtliche Kräfte auf und überträgt diese in einem relativ kleinen Klemmbereich an die einzelnen Wandungen der Teleskopsattelstütze. Dieser Bereich muss stark genug dimensioniert sein, um die Klemm- und Sattel-Kräfte kompensieren zu können, was sich im Gewicht dieser Komponenten zeigt. Weiters verschleißen Komponenten wie Sattelklemmen und auch das Sattelrohr bei mehrmaligem Wechseln der Teleskopsattelstützen im Befestigungsbereich. Zusätzlich liegen bei in sich geschlossenen Systemen wie im Stand der Technik gezeigt die Dichtungen oder Abstreifer im Montagezustand oft nach oben. Im Spalt zwischen den Abstreifern und den beweglichen Bereichen der Stützen sammeln sich Verunreinigungen wie Feuchtigkeit und Staub, welche bei der Absenkbewegung der Stütze auch ins Innere der Stütze gelangen können und somit Beschädigungen an den sensiblen Komponenten verursachen. Durch die ineinander greifenden einzelnen Teleskopsegmente bzw. dem darin befindlichen Kraftspeicher und Arretiersystem ist eine sehr kompakte Bauweise notwendig. Durch diese kompakte Bauweise und die mehrfach ineinander verschachtelten Elemente werden somit nur noch geringe Hubhöhen an der Sattelstütze erreicht. Mehrfach ineinander verschachtelte Teleskopelemente führen auch dazu, dass eines der Teleskopsegmente einen relativ geringen Rohrdurchmesser erreicht und somit für die auftretenden Kräfte unterdimensioniert ist. Oftmals ist es auch nicht möglich, das in sich geschlossene Stützensystem in seiner generellen Gesamtlänge anzupassen und auf die Gegebenheiten des Fahrradfahrers einstellen zu können. Eine variable Teleskopsattelstütze kann nicht einfach abgeschnitten werden und somit an die Körpermaße des Fahrers, wie beispielsweise Innenschrittlänge, angepasst werden. Weiters weisen Teleskopsattelstützen der bekannten Art oftmals sehr stark ausgeprägte Rasterungen auf, in welche das Arretierelement eingreift, um die Sattelstütze in Position zu halten. Diese Rasterungen schwächen den Querschnitt der Sattelstütze, vor allem dann, wenn sie sich um den gesamten Umfang der rohrförmigen Sattelstütze erstrecken. Um eine geringe Querschnittsschwächung zu erzielen, muss somit eine stärkere Wandung bei den Teleskopsegmenten verwendet oder diese ausreichend durch weitere Rohre gestützt werden, was sich negativ in der Gewichtsbilanz der Sattelstütze auswirkt. Ein weiteres Problem bei bestehenden Systemen, insbesondere bei mechanischen Systemen, ist die ungebremste Ausfahrgeschwindigkeit des beweglichen Elements. Radial- und Axialnuten, Züge und andere Mechanik verhindern die Möglichkeit einer Drosselung des Luftstromes. Dies ist nicht sehr komfortabel in der Anwendung, darüber hinaus ist dies nicht mit geringen Rastabständen vereinbar, da die Wahrscheinlichkeit einer nicht korrekten Einraststellung drastisch steigt. Das undefinierte und benutzerabhängige Lösen und Verriegeln des Arretiermechanismus ist ein weiteres Kriterium, weshalb keine geringeren Rastabstände als 20mm erreicht werden, da der Arretiervorgang mit geringer werdenden Rastabständen und steigender Ausfahrgeschwindigkeit, schneller und definierter stattfinden muss. Die daraus resultierenden großen Rastabstände verhindern die Möglichkeit einer Feineinstellung der obersten Sattelposition durch die Begrenzung des Hubes. Es ist möglich, dass der Fahrer den Sattel nicht weit genug begrenzen kann, wodurch er auf eine variable Sattelstütze mit weniger Hub umrüsten muss.

Weitere gattungsgemäße Positioniervorrichtungen werden beispielsweise in der EP 25 74 799 A1 gezeigt. Bei dieser Positioniervorrichtung wird das innere Teleskopelement relativ zum äußeren Teleskopelement verdreht, um eine Längsverstellung vornehmen zu können. Das Herausdrehen der Außenverzahnung aus der Innenverzahnung unter Last ist jedoch aufgrund der dabei entstehenden hohen Reibungskräfte an den Flanken der Verzahnung schwergängig. Zudem ist durch die Reibung ein hoher Verschleiß an den Flanken der Verzahnung zu erwarten. Die Verdrehung des inneren Teleskopelements relativ zum äußeren Teleskopelement ist zudem je nach Anwendungsbereich unerwünscht - wie zum Beispiel bei einer Teleskopsattelstütze - da sich durch das Verdrehen eine Veränderung des Winkels daran angebrachter weiterer Elemente - wie beispielsweise ein Fahrradsattel - ergeben würde. Diese relative Verdrehung, oder in anderen Worten, der Winkelversatz der Teleskopelemente zueinander, muss beim Stand der Technik durch eine zusätzliche Einrichtung kompensiert werden. Beispielsweise bei einer Teleskopsattelstütze könnte eine Verstellung während dem Betrieb des Fahrrades ansonsten nicht vorgenommen werden, da der Fahrradsattel aufgrund der Verdrehung der Teleskopelemente nicht mit der Längsachse des Fahrrades fluchten würde. Der Fahrer müsste somit für die Verstellung absteigen oder den Sattel zumindest vollständig entlasten, was den Betrieb der Teleskopsattelstütze sinnlos machen würde. Eine Verstellung der Sattelstütze in eine tiefere Position erfolgt nur unter Belastung durch das Gewicht des Fahrers.

Teleskopierbare Sattelstützen zählen bereits zum Stand der Technik und werden beispielsweise in der EP 2284068 A2 gezeigt. Herkömmliche Sattelstützen sind über manuelles Lösen eines Klemmmechanismus am Rahmen entlang des Sattelrohres verstellbar. Die Verstellung der Sattelstütze entlang des Sattelrohres erfolgt dabei durch Lösen des Klemmmechanismus und anschließendem Ziehen oder Hineindrücken der Sattelstütze entlang des Sattelrohres. Um die Position der Sattelstütze relativ zum Sattelrohr verstellen zu können, muss man somit vom Fahrrad absteigen. Variable oder teleskopierbare Sattelstützen lassen sich über eine Art Fernbedienung entweder von unter dem Sitz aus oder durch eine "remote"-Schaltung vom Lenker des Fahrrades aus bedienen. Dabei wird der Klemmmechanismus geöffnet und die Sattelstütze fährt aufgrund einer darin befindlichen Kraftquelle (hydraulisch, pneumatisch, Federkraft, ...) aus und kann anschließend über den Klemmmechanismus in einer Position verriegelt werden. Das Absenken der Sattelstütze erfolgt durch das Eigengewicht des Bedieners. Dieser drückt mit seinem Körpergewicht die Sattelstütze in das Sattelrohr hinein und arretiert über den "remote"-Klemmmechanismus deren gewünschte Position. Variable Sattelstützen oder teleskopierbare Sattelstützen, vor allem hydraulische, teleskopierbare Sattelstützen, sind aufgrund vieler zueinander beweglicher Komponenten sehr wartungsintensiv. Hydraulische Stützen arbeiten durch Kammern, in welchen sich ein Hydraulikmedium wie Öl befindet. Falls eine Kammer undicht wird, trägt dies das Risiko eines Ölverlusts mit sich und die Funktion der automatischen Verstellung der Teleskopsattelstütze ist nicht mehr gegeben. Neben dem Aspekt der Umweltverschmutzung durch austretendes Öl sollte auch der Aspekt des Gewichtes des Öles oder anderen hydraulischen Medien in Betracht gezogen werden. Ein mit Öl befüllter Behälter erhöht das Gewicht der variablen Sattelstütze und somit auch des Fahrrads. Die als Stand der Technik angeführte Sattelstütze wird durch das in den Kammern befindliche Hydraulikmedium in seiner Position relativ zum Sattelrohr gehalten. Eine generelle Einstellung und Anpassung der Sattelstütze an den Fahrer kann nur über die Veränderung des Ölvolumens in den Kammern hergestellt werden. Ein Ausführungsbeispiel zeigt auch eine schwer zugängliche Verstelleinheit im Sattelrohr des Rahmens zur Verstellung des Anschlages der Stütze, wobei die Verstellung über eine Überwurfmutter von unten am Rahmen erfolgt. Hierzu muss das Fahrrad entweder umgedreht, gekippt oder angehoben werden, um mit einem Werkzeug von unten durch das Sattelrohr die Verstellung durchführen zu können. Dabei besteht auch das Risiko, dass bei der Entfernung der Überwurfmutter das Öl aus den Kammern entweicht. Weiters kann bei dieser Konstruktion das Sattelrohr nicht wie üblich mit dem Tretlagergehäuse verbunden werden, da das Sattelrohr von unten zugänglich bleiben muss. Dies spiegelt sich hinsichtlich der Torsionssteifigkeit des Rahmens und der Stabilität des Fahrrades wieder.

Aus der US 2014/112703 A1 ist eine teleskopierbare Sattelstütze mit einer Positioniervorrichtung mit einer schwenkbaren Rasteinrichtung, welche in eine Zahnstange eingreift, bekannt.

Aus der US 2011/204201 A1 ist eine teleskopierbare Sattelstütze mit einer Positioniervorrichtung mit einer Rasteinrichtung, welche radial gegenüberliegende Klinken zum Sperren der Bewegung der Sattelstütze zeigt, bekannt. US 2011/204201 A1 offenbart die Merkmale des Oberbegriffs des Anspruchs 1.

Aufgabe der Erfindung ist es, die vorbeschriebenen Nachteile zu vermeiden und eine gegenüber dem Stand der Technik verbesserte Positioniervorrichtung und eine verbesserte teleskopierbare Sattelstütze mit einer solchen Positioniervorrichtung anzugeben.

Dies wird bei der erfindungsgemäßen Positioniervorrichtung durch die Merkmale des Anspruches 1, sowie bei der erfindungsgemäßen Anordnung aus einer teleskopierbaren Sattelstütze und einem Fahrradrahmen durch die Merkmale des Anspruches 10 erreicht.

Wenn die Rasterung in der Innenfläche des Teleskopelementes angeordnete und in Umfangsrichtung begrenzte Radialnuten aufweist, so wird der Querschnitt des Teleskopelements nicht zu stark beeinflusst wie bei einer sich um den kompletten Umfang erstreckenden Rasterung. Es werden durch die begrenzte Ausführung der Radialnuten bessere Festigkeitswerte erzielt. Es kann dadurch auch bei der Herstellung des Teleskoprohres ein dünnwandigeres und leichteres Material benutzt werden, was sich positiv auf das Gewicht der Positioniereinheit auswirkt. Im Falle der Verwendung der Positioniervorrichtung in einer Sattelstütze, werden die in Umfangsrichtung begrenzten Radialnuten links und rechts der Fahrradlängsachse platziert, sodass diese bei Biegebelastung der Sattelstütze in der neutralen Faser liegen und somit keine Schwächung der Rohrstruktur entsteht.

Wenn die Arretiervorrichtung fest am Stützelement angeordnet ist erfolgt eine direkte Krafteinleitung der durch das Teleskopelement in das Stützelement einwirkenden Kräfte.

Wenn das Teleskopelement zumindest eine sich entlang der Längsachse erstreckende Führungsnut aufweist, wobei zumindest ein an dem Stützelement angeordnetes Führungselement in die zumindest eine Führungsnut eingreift und entlang der Führungsnut beweglich gelagert ist, so entsteht eine spielfreie Lagerung zwischen Teleskopsegment und Stützelement. Je nach Ausgestaltung der Führungselemente und Führungsnut können somit die in die Positioniervorrichtung einwirkenden Torsionskräfte besser abgeleitet werden, die Kräfte wirken nicht nur in die Arretiervorrichtung ein. Somit muss die Arretiervorrichtung nicht zur Aufnahme von Torsionskräften ausgebildet sein, was eine einfachere und somit auch sichere und leichtere Konstruktion mit sich führt.

Dadurch, dass das zumindest eine Rastelement durch zumindest einen Steller betätigbar ist, kann eine "remote"-Steuerung hergestellt werden. Über zum Beispiel einen Bowdenzug oder einen Servoantrieb kann der Steller betätigt werden und das Rastelement bewegen. Eine Art Fernsteuerung wird somit realisiert, das Rastelement muss nicht direkt angesteuert werden. Im Falle der Verwendung der Positioniereinheit in einer Sattelstütze kann die Remotesteuerung zum Beispiel in Form eines Hebels, Schalters oder Drehgriffes - am Lenker des Fahrrades angebracht werden. Über die Betätigung der "remote"-Steuerung wird der Steller und somit das Rastelement bewegt. Der Steller kann durch eine Remotesteuerung mechanisch, hydraulisch, pneumatisch oder elektrisch bewegbar angesteuert werden.

Als vorteilhaft hat es sich herausgestellt, dass das zumindest eine Rastelement beweglich in einem Gehäuse gelagert ist, wobei zwischen dem zumindest einen Rastelement und dem Gehäuse zumindest eine Rückstelleinheit angeordnet ist, welche das zumindest eine Rastelement in einer Schließstellung hält, bleibt die Positioniervorrichtung selbsthemmend in ihrer Position und lässt sich nur nach Überwinden der durch die Rückstelleinheit wirkenden Kräfte aus ihrer Position bewegen. Durch diese Selbsthemmung wird eine sicher gesperrte Positioniervorrichtung erzielt, welche sich nicht unbeabsichtigt verstellt, da sie das Bestreben hat, in ihrer Schließposition zu verharren.

Wenn bei Betätigung des zumindest einen Stellers das zumindest eine Rastelement entgegen die Rückstelleinheit in eine Offenstellung verstellbar ist, lässt sich die Arretiervorrichtung verschieben und eine neue Position der Positioniervorrichtung ist auswählbar. Durch die permanent wirkende Rückstelleinheit muss der Steller unter Krafteinwirkung stehen um das Rastelement in der Offenstellung zu halten. Wird der Steller nicht mehr betätigt, bewegt sich das zumindest eine Rastelement schlagartig nach Außen in die dafür vorgesehene, korrespondierende Rasterung. Dieses schlagartige Einrasten hat zur Folge, dass das Positionieren der Teleskopiereinheit ohne Verzögerung erfolgt.

Als vorteilhaft hat sich herausgestellt, wenn sich eine Stange entlang der Längsachse durch die Positioniervorrichtung erstreckt, wobei die Stange mit einem Kraftspeicher verbunden ist und wobei an der Stange direkt oder über einen Stangenadapter, eine Stangenarretierung angeordnet ist, welche mit der Rasterung in Eingriff bringbar ist. Wenn die Stangenarretierung durch eine Drehung um die Längsachse mit der Rasterung in Eingriff bringbar ist und die Position der Stange relativ zum Teleskopelement entlang der Längsachse gesperrt wird, wird die Möglichkeit geschaffen, die Stange entlang der Längsachse zu verschieben und über die Stangenarretierung in der Rasterung zu arretieren, wird der Abstand des Stützrohres zum Teleskoprohr in seiner Grundeinstellung fixiert. Die Positioniervorrichtung kann auf ihren Einsatzbereich angepasst werden. Wird die Positioniervorrichtung beispielsweise in einer Sattelstütze für ein Fahrrad verwendet, kann über die Stangenarretierung der untere Anschlagpunkt bzw. die minimale Sattelhöhe eingestellt werden.

Wenn zumindest ein Umlenker die Bewegung des Stellers entlang der Längsachse in eine Bewegung quer zur Längsachse umlenkt und die Bewegung an das - mit dem Umlenker in Kontakt stehende - zumindest eine Rastelement überträgt, hat dies zur Folge, dass ein kompaktes System hergestellt werden kann. Umlenksysteme außerhalb des Teleskopelementes sind somit nicht notwendig; es stehen keine Vorrichtungen aus der Grundform der Positioniervorrichtung heraus, welche beim Einsatz stören könnten. Die Umlenker befinden sich im Inneren des Teleskoprohres und ragen nicht aus der Positioniervorrichtung heraus. Staub oder Verunreinigungen anderer Art können die Funktion des Systems nicht beeinträchtigen. Die kompakte Bauweise trägt ebenfalls zur Gewichtsreduktion bei.

Wenn eine Anschlagmutter abschnittsweise auf einem Gewinde einer Anschlagspindel und die Anschlagmutter im Inneren einer Stange verdrehsicher geführt sind und wenn am Ende der Stange ein Kolben als Anschlag fixiert und die Anschlagspindel am Zylinderboden fixiert ist, kann durch die Verdrehung der Stange zum Beispiel der Anschlag der Positioniervorrichtung zum Kraftspeicher eingestellt werden. Dieser Anschlag bestimmt den Systemhub der Positioniervorrichtung, der durch den Kraftspeicher ausgeübt wird. Die Stange weist für die Verdrehung um die Längsachse an ihrem zugänglichen Ende eine Werkzeugaufnahme auf.

Wenn über eine Positionserfassungseinrichtung die Position des Stützelementes relativ zum Teleskopelement entlang der Längsachse erfassbar ist, können die ermittelten Werte der Positionserfassungseinrichtung an ein Steuer- und Regelsystem weitergegeben werden. Einzelne Positionen entlang der Positioniervorrichtung können somit gespeichert und automatisch angefahren werden. Bei einer Sattelstütze eines Fahrrades kann beispielsweise so die optimale Stellung des Sattels für das Gelände, in dem sich der Fahrradfahrer bewegt, gespeichert und mittels Knopfdruck abgerufen werden.

Gemäß einem weiteren Aspekt der Erfindung ist vorgesehen, dass das Stützelement einen Befestigungsabschnitt aufweist, der über ein quer zur Längsachse des Sattelrohres einsetzbares Befestigungselement mit dem Sattelrohr verbindbar ist. Auf diese Weise wird ein einfacher Einbau der teleskopierbaren Sattelstütze realisiert und zusätzlich der Effekt erzielt, dass eine optimale Krafteinleitung der an der Sattelstütze auftretenden Kräfte in den Fahrradrahmen erfolgt.

Weitere Einzelheiten und Vorteile der vorliegenden Erfindung werden anhand der Figurenbeschreibung unter Bezugnahme auf die in den Zeichnungen dargestellten Ausführungsbeispiele näher erläutert.

Darin zeigen:

Fig. 1        eine Positioniervorrichtung in einer Schnittdarstellung,

Fig. 2        ein Anwendungsbeispiel der Positioniervorrichtung in einer teleskopierbaren Sattelstütze,

Fig. 3a, 3b        Explosionszeichnungen Arretiervorrichtung,

| Fig. 4 | Schnittdarstellung Positioniervorrichtung, |
| Fig. 5a, 5b | Querschnittszeichnungen Führungselement und Arretiervorrichtung, |
| Fig. 6a, 6b | Konstruktionsdetails Rasterung und Arretiervorrichtung, |
| Fig. 7a, 7b | Querschnittszeichnung und Schnittdarstellung Positioniervorrichtung mit Anschlagspindel, |
| Fig. 8 | Fahrradrahmen Schnittdarstellung mit eingesetzter Sattelstütze in Montagestellung, |
| Fig. 9a, 9b | Detailzeichnung; Detail A aus Fig. 8 in unterschiedlich geschnittenen Darstellungen, |
| Fig. 10 | Überlastkupplung und Ausgleichsvorrichtung an Stützelement, |
| Fig. 11 | Explosionszeichnung Überlastkupplung und Ausgleichsvorrichtung, |
| Fig. 12 | Einbau Sattelstütze und Befestigungselement, |
| Fig. 13 | Befestigungselement mit Schnellspanner, |
| Fig. 14 | Variante Befestigungsmittel, |
| Fig. 15 | Variante Führungsnut Stützelement zu Teleskopelement und |
| Fig. 16a, 16b | Remotesteuerung und Kraftquellen. |

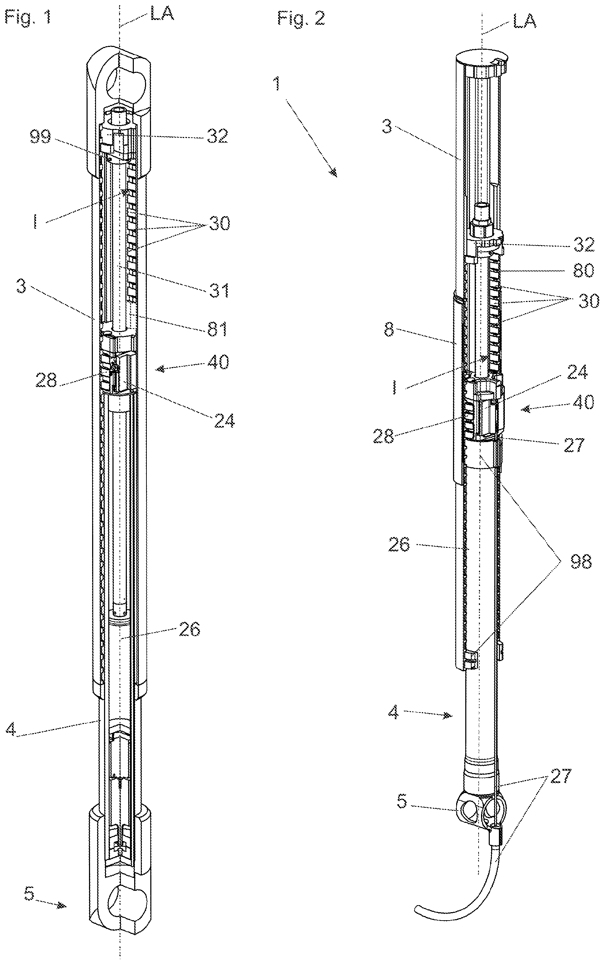

Fig. 1 zeigt eine Positioniervorrichtung 40 mit einer Rasterung 30, einer Arretiervorrichtung 24 mit zumindest einem Rastelement 28, welches in die Rasterung 30 eingreifbar an der Arretiervorrichtung 24 beweglich gelagert ist. Die Arretiervorrichtung 24 ist mit dem Stützelement 4 fest verbunden und das Stützelement 4 weist einen Kraftspeicher 26 auf. Der Kraftspeicher 26 ist beispielsweise als Gasdruckfeder ausgeführt, deren Stange 31 - in anderen Worten: Zylinderstange - über den Stangenadapter und die Stangenarretierung 32 mit der Rasterung 30 des Teleskopelementes 3 in Kontakt steht. Wird das Teleskopelement 3 bewegt und die Arretiervorrichtung 24 ist in einer Offenstellung (greift somit nicht in die Rasterung 30 ein) kann das Teleskopelement 3 entlang seiner Längsachse LA und dem Stützelement 4 bewegt werden. Die Rasterung 30 befindet sich an der Innenseite des Teleskopelementes 3 und ist somit vor Verunreinigungen geschützt. Auch die Arretiervorrichtung 24 befindet sich im Inneren verbaut und ist vor Umwelteinflüssen geschützt gelagert. Die Oberfläche des Stützelementes 4 korrespondiert mit der Form der Innenseite des Teleskopelementes 3. Dies kann entweder direkt erfolgen oder durch zwischen dem Teleskopelement 3 und dem Stützelement 4 befindliche Gleitelemente und/oder Dichtungen. Ein spielfreies Verschieben des Teleskopelementes 3 auf dem Stützelement 4 ist somit gewährleistet.

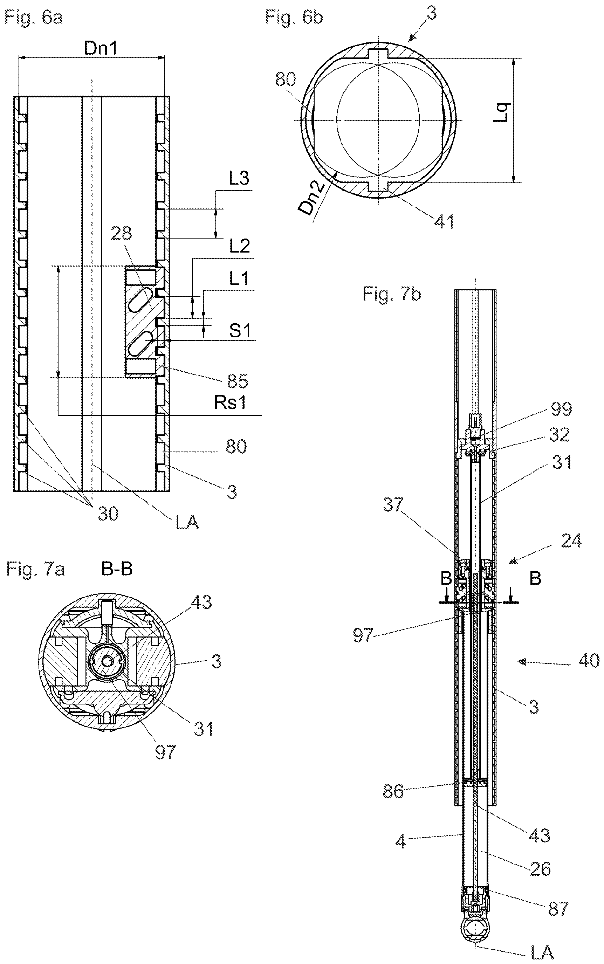

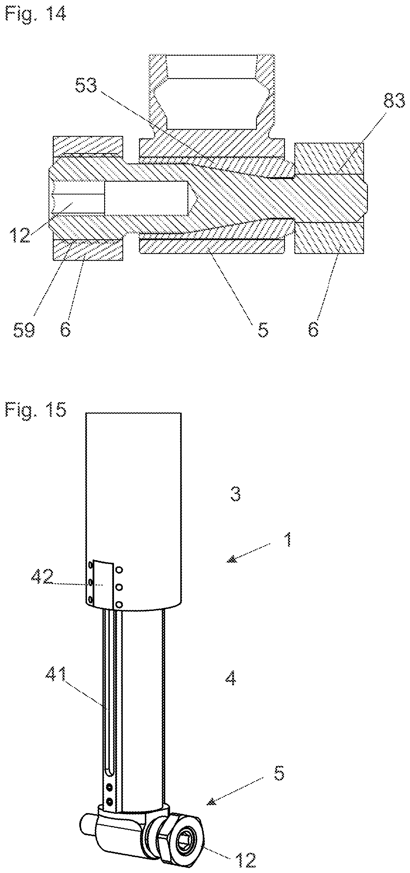

Fig. 2 zeigt die Anwendung der Positioniervorrichtung 40 in einer teleskopierbaren Sattelstütze für ein Fahrrad. Dabei wird über einen Steller 27 die Arretiervorrichtung 24 entweder in eine Offenstellung oder in eine Schließstellung gebracht. Das zumindest eine Rastelement 28 wird über den Steller 27 betätigt. Wird beispielsweise im Steller 27 gezogen, zieht sich das zumindest eine Rastelement in Richtung der Längsachse LA radial zurück und hat keinen Kontakt mehr zur Rasterung 30. Somit ist die Arretiervorrichtung 24 in eine Offenstellung gebracht worden und das Teleskopelement 3 lässt sich entlang der Längsachse LA relativ zum Stützelement 4 verschieben. Wird keine Kraft auf den Steller 27 ausgeübt, geht das zumindest eine Rastelement 28 schlagartig in die Schließposition zurück und nimmt Kontakt zur Rasterung 30 auf. Ein Verschieben des Teleskopelementes 3 entlang der Längsachse LA und entlang des Stützelementes 4 ist somit nicht mehr möglich. das Teleskopelement 3 kann über die Stangenarretierung 32 in seiner Position relativ zum Stützelement 4 zusätzlich verändert werden. Über diese Einstellung kann die tatsächliche Länge der teleskopierbaren Sattelstütze 1 grundeingestellt werden Mittels diesen Mechanismus wird der untere Anschlagpunkt bzw. die minimale Sattelhöhe eingestellt. Über einen Anschlagring 98, welcher entlang der Rasterung 30 verstellbar ist, oder über eine Hubbegrenzung der Stange 31 (siehe Fig. 7b), kann die maximale Sattelposition und somit der Systemhub eingestellt werden. Personen mit einer großen Schrittlänge können somit die Maximallänge der teleskopierbaren Sattelstütze 1 an ihre Körpereigenschaften anpassen sowie auch Fahrradfahrer mit einer kürzeren Schrittlänge. Die Grundeinstellung der teleskopierbaren Sattelstütze 1 erfolgt somit über die Stangenarretierung 32, den Anschlagring 98 oder eine Hubbegrenzung der Stange 31 (siehe Fig15b), das abschnittsweise Positionieren entlang der Längsachse während dem Fahrbetrieb des Fahrrades erfolgt über die Arretiervorrichtung 24. Die teleskopierbare Sattelstütze 1 ist über den Befestigungsabschnitt 5 mit dem Fahrradrahmen 17 (in dieser Figur nicht dargestellt) verbunden.

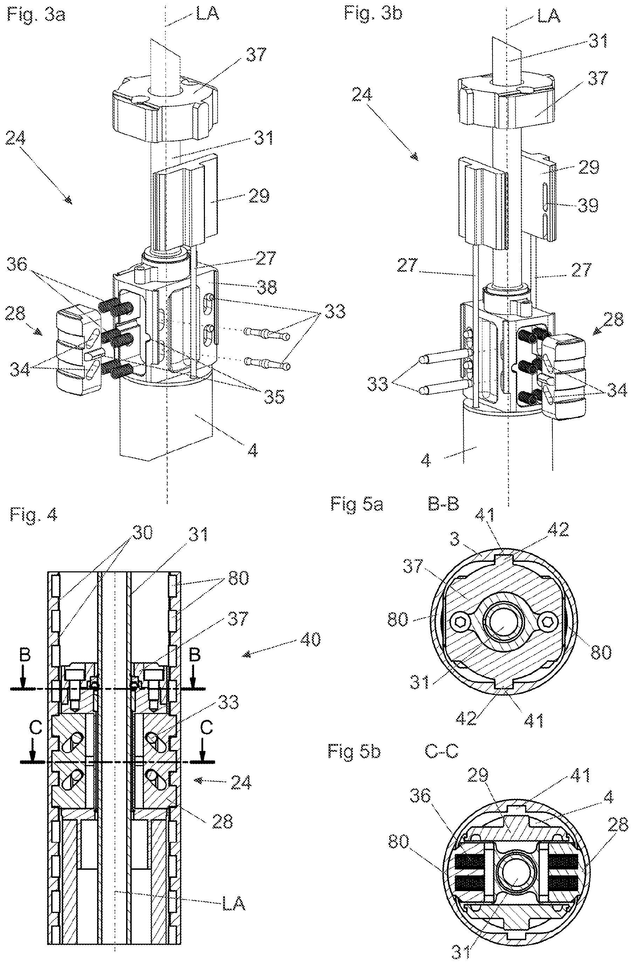

Fig. 3a zeigt die Arretiervorrichtung 24 mit zumindest einem Rastelement 28, welches über Aufnehmer 35 mit einem Gehäuse 38 verbunden ist. Zwischen dem zumindest einen Rastelement 28 und dem Gehäuse 38 befindet sich zumindest eine Rückstelleinheit 36 in Form einer Feder, eines Elastomers oder auch eines hydraulischen oder pneumatischen Stößels. Durch die zumindest eine Rückstelleinheit 36 wird das Rastelement 28 permanent radial von der Längsachse LA oder quer zur Längsachse LA weggedrückt und vom Gehäuse 38 weggespreizt. Das Rastelement 28 greift dabei in die Rasterung 30 (in dieser Figur nicht dargestellt) ein. Durch die zumindest eine Rückstelleinheit 36 entsteht somit eine selbsthemmende Arretierung des zumindest einen Rastelements 28 an der Rasterung 30. Das zumindest eine Rastelement 28 wird über Umlenker 33, welche beweglich im Gehäuse 38 gelagert sind, gegen die zumindest eine Rückstelleinheit 36 bewegt. Dabei kann der Umlenker 33 als Kipphebel - wie in der Fig. 3a dargestellt - ausgeführt sein: auf einer Seite wird der Umlenker 33 mit seinem Kopf gelenkig und starr relativ zur Längsachse LA gelagert, der mittlere Bereich des Umlenkers 33 greift in eine Schrägfläche 34 des Rastelementes 28 ein und an einem vom Kopf abgewandten Ende wird der Umlenker 33 bewegt. Durch den Kontakt des Umlenkers 33 mit der Schrägfläche 43 wird das Rastelement 28 bewegt. Die Bewegung des Umlenkers 33 erfolgt über das Betätigungselement 29. Das Betätigungselement 29 ist entlang der Längsachse LA beweglich mit dem Gehäuse 38 verbunden. Die Umlenker 33 greifen in dieses längsbewegliche Betätigungselement 29 ein und werden relativ zu den Schrägflächen 34 am Rastelement 28 bewegt. Durch die Rückstellkraft der zumindest einen Rückstelleinheit 36 und der entgegenwirkenden Kraft durch das Betätigungselement 29 und dem daran befindlichen Steller 27 wird das Rastelement 28 vom Gehäuse 38 weg bewegt oder an das Gehäuse 38 herangezogen.

Die Fig. 3b zeigt ein weiteres Ausführungsbeispiel der Arretiereinheit 24. Die Umlenker 33 sind dabei nicht als Kipphebel ausgeführt, sondern werden an ihren beiden Enden durch jeweils ein Betätigungselement 29 gelagert. Durch die beidseitige Lagerung der Betätigungselemente 29 und der Verbindung der Betätigungselemente 29 mit den Stelleren 27 werden die Umlenker 33 entlang der Längsachse LA und auch entlang der Schrägflächen 34 des Rastelementes 28 bewegt. Wie auch in der Fig.3a geschildert, führt die Bewegung der Umlenker 33 dazu, dass das Rastelement 28 radial vom Gehäuse 38 wegbewegt oder an dieses herangezogen wird und das Rastelement 28 in eine Offen- oder Schließstellung verfährt.

Fig. 4 zeigt eine Positioniereinheit 40 in der Schnittdarstellung im Detail. Die Rasterung 30 besteht aus den Radialnuten 80, in welche die Rastelemente 28 eingreifen. Entlang der Stange 31 befindet sich zumindest ein Führungselement 37, welches das Teleskopelement 3 radial spielfrei mit der Stange 31 verbindet. Die Stange 31 ist Bestandteil des Stützelementes 4. Weiters zwischen Stange 31 und Teleskopelement 3 angeordnet befindet sich die Arretiervorrichtung 24 mit den Rastelementen 28.

In der Fig. 5a dargestellt ist der Bereich B-B aus der Fig. 4. In dieser Querschnittszeichnung wird gezeigt, wie das Führungselement 37 mit seinem Führungsabschnitt 42 in die Führungsnut 41 des Teleskopelementes 3 eingreift. Das Führungselement 37 ist dabei radial spielfrei mit der Stange 31 verbunden.

Fig. 5b zeigt den Schnitt C-C aus der Fig. 4. Erkennbar dabei ist, wie das zumindest eine Rastelement 28 in die Radialnut 80 eingreift. Dies erfolgt durch die Rückstelleinheit 36. Sollte das zumindest eine Rastelement 28 aus der Radialnut 80 herausgezogen werden, muss gegen die Rückstellkräfte der Rückstelleinheit 36 gearbeitet werden. Dies erfolgt über Betätigung des Stellers 27 (in dieser Zeichnung nicht dargestellt). Die Führungsnut 41 ist relativ zum Zentrum der zumindest einen Radialnut 80 um 90° versetzt angeordnet.

Fig. 6a zeigt eine Schnittdarstellung der Positioniervorrichtung 40. Die Rastung 30 erstreckt sich mit einem Rastabstand L3 entlang dem Teleskopelement 3. Der Rastabstand L3 beträgt vorzugsweise 6mm. Dies ermöglicht eine Positionierung des zumindest einen Rastelementes 28 in einem 6mm Raster entlang der Längsachse LA der Positioniervorrichtung 40 und somit eine Längenverstellung in 6mm Schritten. Je nach Art des Einsatzes der Positioniervorrichtung 40 kann dieser Wert variieren. Der maximale Innendurchmesser des rohrförmigen Teleskopelementes 3 - folglich Nutendurchmesser Dn1 genannt - beträgt 30mm. Je nach Art des Einsatzes der Positioniervorrichtung 40 kann dieser Wert variieren. Wichtig ist jedoch, dass die Werte in einer gewissen Art miteinander in einem Verhältnis stehen, um eine optimale Stabilität und auch Rastverbindung bei einer kompakten Bauweise zu erzielen. Die Radialnuten 80 zur Aufnahme zumindest einer Nocke 85 eines Rastelementes 28 sind wie folgt ausgestaltet: Die Rastnutbreite L2 weist einen Wert von 4,5mm und die Rastflankenhöhe S1 einen Wert von 1,5mm auf. Korrespondierend dazu ist mit einem geringen Untermaß die zumindest eine Nocke 85 ausgestaltet, um spielfrei in der zumindest einen Radialnut 80 eingreifen zu können. Ein Rastelement 28 weist zumindest eine Nocke 85 auf. Eine Ausführung mit zumindest 2 Nocken 85 ist vorzuziehen, vorzugsweise kommen 4 Nocken an einem Rastelement 28 zum Einsatz. Die effektive Länge des Rastelementes, gemessen im Montagezustand entlang der Längsachse LA, beträgt 23mm. Der Nutformdurchmesser Dn2, gezeigt in der Fig. 6b - eine Querschnittszeichnung des Teleskoprohres 3 - errechnet sich aus dem Querabstand Lq. Dieser beträgt 25,5mm.

Folgende Rechnungen zeigen die Verhältnisse der Maße zueinander:

$$Dn2 = Lq \times 0{,}95$$

$$Dn1 / 20 = S1$$

$$S1 \times 1 \text{ bis } S1 \times 9 = S1$$

$$D1 / 10 \text{ bis } D1 / 2 = L3$$

$$Dn1 / 1{,}3 = Rs1$$

Fig. 7a zeigt eine Anschlagspindel 43 in einer Anschlagmutter 97 in einer Stange 31 im Querschnitt. Durch ein Gewinde im Inneren der Anschlagmutter 97, welches mit einem Gewinde an der Anschlagspindel 43 korrespondiert und einer verdrehfesten und linear gleitenden Lagerung zwischen Stange 31 und Anschlagmutter 97 wird durch eine Drehbewegung der Stange 31 um die Längsachse LA aufgrund der Gewindesteigung die Position der Anschlagmutter 97 relativ zur Anschlagspindel 43 verändert. An der Stange 31 befindet sich beispielsweise ein Kolben 86 eines als Kraftspeicher 26 agierenden Gaszylinders, was in Fig. 7b ersichtlich ist. Durch die Veränderung der Drehposition der Stange 31, in diesem Ausführungsbeispiel die Kolbenstange des Gaszylinders, welcher gleichzeitig das Stützelement 4 darstellt, wird die Position der Anschlagmutter 97 relativ zur Anschlagspindel 43 verändert, wobei die Anschlagspindel 43 am Zylinderboden 87 fix montiert ist. Durch diese Veränderung tritt der Kolben 86 je nach Einstellung der Anschlagmutter 97 zur Anschlagspindel 43 entweder früher oder später bei einer Bewegung der Stange 31 mit der Anschlagmutter 97 in Kontakt, was eine einstellbare Hubbegrenzung der Positioniervorrichtung 40 ausbildet.

Die Verstellung der Stange 31 relativ zur Anschlagspindel 43 kann werkzeuglos oder durch ein Werkzeug erfolgen. Erreichbar ist die Stange 31 zum Beispiel durch das obere Ende der Positioniervorrichtung 40. Durch das Lösen des Kontakts des Teleskopelements 3 und des Führungselement 37 und bei einem verdrehfesten, aber linear gleitenden Kontakt zwischen Stange 31 und Teleskopelement 3, kann durch die Rotation des Teleskopelements 3 die Anschlagposition eingestellt werden. Dies entspricht einer Einstellung der Sattelhöhe durch eine Rotation des Sattels.

Die Bewegung der Stange 31 entlang der Längsachse LA ist gedämpft; dies kann beispielsweise über Drosselbohrungen oder Endlagendämpfungen am Kolben 86 erfolgen. Es ist eine Drosselung der Ausfahrgeschwindigkeit in nur eine Richtung möglich, hierzu wird am Kolben zusätzliche ein Rückschlageelement platziert, wodurch der Sattel kontrolliert ausfährt, jedoch beim Versenken durch das Körpergewicht keine Zusätzliche Gegenkraft entsteht.

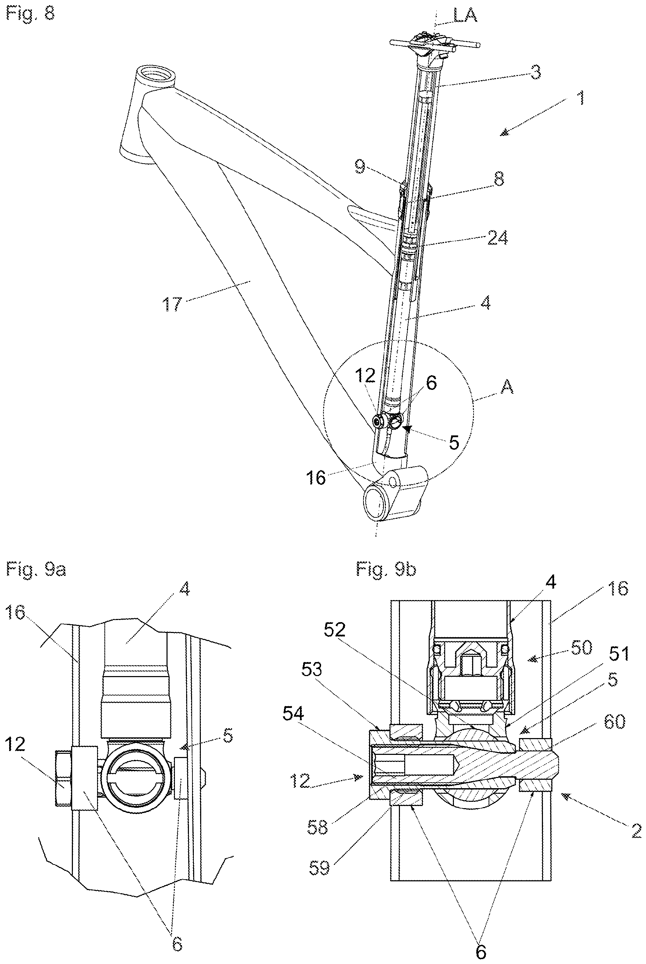

Der Stangenadapter 99 und die Stangenarretierung 32 sind zueinander um die Achse LA rotierbar gelagert. Entlang der Achse LA besteht eine lösbare Verbindung, welche entweder kraftschlüssig über mechanische Rasten bzw. über kreisförmig angeordnete Magnete, oder formschlüssig über eine abnehmbare Mutter bzw. einen abnehmbare Sicherungsring ausgeführt werden kann. Bei einer kraftschlüssigen Verbindung zwischen Stangenadapter 99 und Stangenarretierung 32 kann diese, bei einer Offenstellung der Arretiervorrichtung 24 (siehe Fig. 9), durch aufbringen einer bestimmten Mindestkraft am Teleskopelement 3 gelöst werden. Dies entspricht einer werkzeuglosen Demontage des Teleskopelements 3.

Fig. 8 zeigt einen Fahrradrahmen 17, dessen Sattelrohr 16 sich oberhalb des Tretlagers nach oben erstreckt und einen Hohlkörper ausbildet, in dem sich die teleskopierbare Sattelstütze 1 befindet. Die teleskopierbare Sattelstütze 1 ist am Befestigungsabschnitt 5 mit dem Befestigungselement 12 mit dem Sattelrohr 16 verbunden. Am oder im Sattelrohr 16 befindet sich zumindest ein Verbindungsabschnitt 6, durch welchen das Befestigungselement 12 hindurchragt und in weiterer Folge mit dem Befestigungsabschnitt 5 kontaktiert. Die teleskopierbare Sattelstütze 1 ist am oberen Ende des Sattelrohres 16 durch das Gleitelement 8 am Sattelrohr 16 entlang der Längsachse LA verschiebbar gelagert. Das Teleskopelement 3 ragt dabei aus dem Sattelrohr 16 und dem darin befindlichen Gleitelement 8 heraus und ist entlang der Längsachse LA relativ zum Stützelement 4 bzw. zum Sattelrohr 16 verschiebbar gelagert. Ein Abstreifer 9 am Gleitelement 8 verhindert das Eindringen von Verunreinigungen in den Fahrradrahmen 17. Am oberen Ende des Teleskopelementes 3 befindet sich die Aufnahme für den Fahrradsattel. Das Befestigungselement 12 wird quer zur Längsachse LA in den Befestigungsabschnitt 5 eingesetzt.

Fig. 9a zeigt eine Schnittzeichnung des Detailbereichs A aus der Fig. 8, wobei das Sattelrohr 16 geschnitten dargestellt wird. Das Befestigungselement 12 ragt dabei durch die am Sattelrohr 16 befindlichen Verbindungsabschnitte 6. In diesem Ausführungsbeispiel wird gezeigt, wie sich an einer Seite des Sattelrohres 16 ein Verbindungsabschnitt 6 befindet und auf der gegenüberliegenden Seite ein zweiter Verbindungsabschnitt 6. Der Befestigungsabschnitt 5 befindet sich dabei zwischen den zwei Verbindungsabschnitten 6 und verharrt in dieser Position. Am Befestigungsabschnitt 5 ist das Stützelement 4 angeordnet. Somit werden Kräfte, welche sich über das Stützelement 4 nach unten in den Fahrradrahmen fortsetzen, über den Befestigungsabschnitt 5 in das Befestigungselement 12 und somit über die Verbindungsabschnitte 6 in das Sattelrohr 16 eingeleitet.

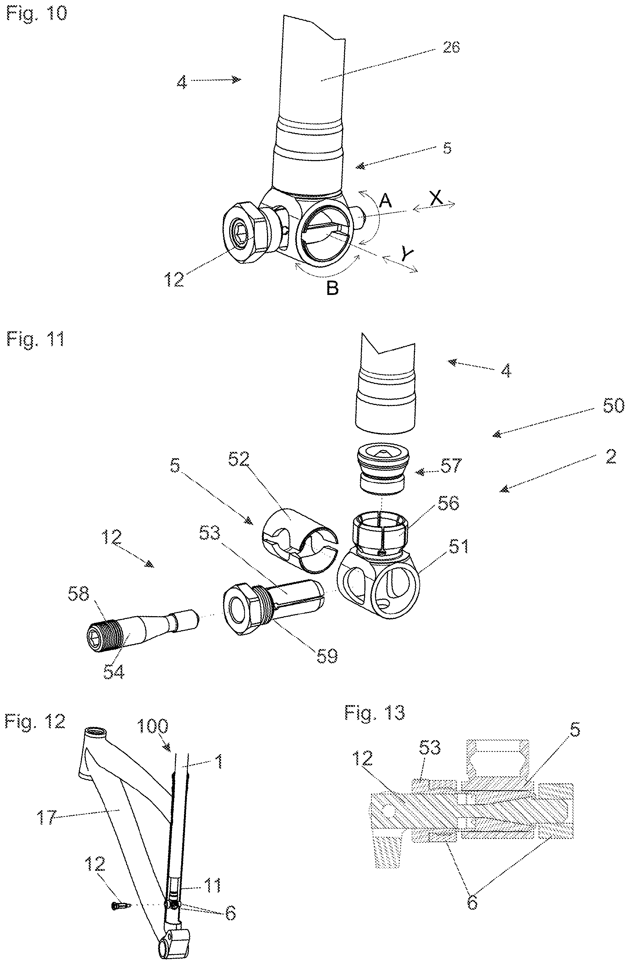

Fig. 9b zeigt eine Schnittdarstellung der Ausgleichsvorrichtung 2 bzw. der Überlastkupplung 50. Die Ausgleichsvorrichtung 2 besteht aus mehreren Einzelteilen, wie z. B. das Befestigungselement 12 und dem Befestigungsabschnitt 5. Das Befestigungselement 12 besteht aus einer Außenhülle 53 und einem darin verschiebbaren Spreizelement 54. Durch eine Bewegung des Spreizelementes 54 in die Außenhülle 53 wird die Außenhülle 53 nach außen gespreizt. Die Längsverstellung von Spreizelement 54 relativ zur Außenhülle 53 wird über das Verstellgewinde 58 erreicht, kann jedoch auch über einen Schnellspanner erzeugt werden. Die Außenhülle 53 selbst weist ebenfalls ein Befestigungsgewinde 59 auf, welches mit dem Verbindungsabschnitt 6 korrespondiert. Anstelle des Befestigungsgewindes 59 kann auch hier auf eine andere Befestigungsmöglichkeit wie Beispielsweise einen Schnellspanner mit Exzenter oder Kniehebel zurückgegriffen werden. Der Befestigungsabschnitt 5 weist ebenfalls verdrehbare und längs verschiebbare Elemente auf, welche durch das Spreizen der Außenhülle 53 in ihrer Form gesperrt werden. Diese werden in der Fig. 11 näher erläutert. Die Überlastkupplung 50, in diesem Ausführungsbeispiel direkt mit dem Befestigungsabschnitt 5 verbunden, ist als Rutschkupplung ausgeführt. Bei einer bestimmten Überlast kann somit das Stützelement 4 um die Längsachse LA gedreht werden. Die Kupplung kann als Reibkupplung, Klauenkupplung oder eine andere Art von Kupplung ausgestaltet sein. Ein Federelement an der Kupplung könnte z. B. für ein automatisches Rückstellen der Sattelstütze 1 relativ zum Sattelrohr 16 führen.

Fig. 10 zeigt die Ausgleichsvorrichtung 2 im entlasteten Zustand. Aufgrund der beweglichen Einzelteile sind Drehbewegungen um die Achse X bzw. um die Achse Y möglich - dies wird durch die Pfeile A bzw. B gezeigt. Weiters ist eine Verstellung entlang der Achsen X bzw. Y möglich, was ebenfalls durch Pfeile dargestellt wird. Im entlasteten Zustand kann sich somit der Befestigungsabschnitt 5 um und entlang dieser Achsen relativ zum Befestigungselement 12 bewegen. Wird das Spreizelement 54 im Befestigungselement 12 nach innen versetzt, werden die Bewegungen der einzelnen beweglichen Elemente durch das Aufspreizen der Außenhülle 53 zueinander gesperrt.

Fig. 11 zeigt eine Explosionsdarstellung des Befestigungselementes 12 und des Befestigungsabschnittes 5 bzw. der Überlastkupplung 50. Das Spreizelement 54 wird über ein Verstellgewinde 58 in die Außenhülle 53 gedreht. Dabei erfolgt eine Längsverstellung des Spreizelementes 54 relativ zur Außenhülle 53. Die Längsverstellung kann auch über ein anderes Konstruktionsmittel ausgeführt werden, wie zum Beispiel einen Hebel an einem Exzenter (siehe Fig. 13). Die Außenhülle 53 wird dabei radial gespreizt. Die Außenhülle 53 weist ein Befestigungsgewinde 59 auf, welches in weiterer Folge mit dem Rahmen des Fahrzeugs über die Verbindungsabschnitte 6 kontaktiert (in dieser Figur nicht dargestellt). Die Befestigung kann auch durch eine andere Art wie zum Beispiel einen aus dem Fahrradsektor bekannten Schnellspanner erfolgen. Die Außenhülle 53 greift in ein Einsatzteil 52 ein. Auch das Einsatzteil 52 ist radial aufspreizbar und wird bei Spreizung der Außenhülle 53 ebenfalls radial gespreizt. Diese radiale Spreizung überträgt sich auf das Korpusteil 51, wobei durch die Spreizkräfte, die sich von Außenhülle 53 auf das Einsatzteil 52 übertragen, die einzelnen Bestandteile nicht mehr zueinander frei bewegbar sind. Auf diese Weise kann im entspannten Zustand der Ausgleichsvorrichtung die Außenhülle 53 relativ zum Einsatzteil 52 und wiederum die Anordnung von Außenhülle 53 und Einsatzteil 52 zum Korpusteil 51 entlang der in Fig. 10 gezeigten Achsen und um diese Achsen frei bewegt werden. Bei Spreizung durch das Spreizelement 54 werden diese Bewegungen gesperrt. Die einzelnen spreizbaren Bestandteile bilden sich nach der Entlastung in ihre ursprüngliche Form elastisch zurück.

Fig. 12 zeigt den Einbau der Sattelstütze 1 in den Fahrradrahmen 17. Dabei wird das Befestigungselement 12 vor dem Einschieben der teleskopierbaren Sattelstütze in das Sattelrohr 16 entfernt. Nach Einschieben der Sattelstütze 1 in das Sattelrohr 16 wird das Befestigungsmittel 12 in den zumindest einen Verbindungsabschnitt 6 eingesetzt und anschließend befestigt.

Fig. 13 zeigt eine Variante des Befestigungsmittels 12 ausgeführt als Schnellspanner mit einem Exzenter. Bei Betätigung des Schnellspanners wird die Außenhülle 53 gespreizt, da sich das Befestigungsmittel vom zumindest einen Verbindungsabschnitt 6 abdrückt. Diese Art der Verbindung lässt sich auch mit einer Ausgleichsvorrichtung 2, wie in Fig. 10b gezeigt, kombinieren.

Fig. 14 zeigt eine weitere, vereinfachte Variante des Befestigungsmittels 12. Dabei wird die Außenhülle 53 direkt von einem der Verbindungsabschnitte 6 abgedrückt, sobald das Befestigungsmittel 12 darin eingesetzt wird. Einer der Verbindungsabschnitte 6 weist dabei zusätzlich eine Passung 83 für eine spielfreie Verbindung mit dem Befestigungsmittel 12 auf. Der weitere Verbindungsabschnitt 6 weist den Befestigungsbereich für das Befestigungsmittel 12 auf - in diesem Ausführungsbeispiel das Befestigungsgewinde 59. Diese Art der Verbindung lässt sich auch mit einer Ausgleichsvorrichtung 2, wie in Fig. 9b gezeigt, kombinieren. Anstelle von einer Kombination aus Passung 83 und Befestigungsgewinde 59 kann auch nur eine Verbindung über Befestigungsgewinde 59 in beiden Verbindungsabschnitten erfolgen. Denkbar ist auch, dass das Befestigungselement 12 direkt in den Befestigungsabschnitt 5 eingesetzt wird und keine Ausgleichsvorrichtung 2 verwendet wird. Dabei kann das Befestigungselement 12 ohne Konus ausgestaltet werden.

Fig. 15 zeigt eine Variante der Verdrehsicherung zwischen Teleskopelement 3 und Stützelement 4. Parallel zur Längsachse LA der Sattelstütze 1 erstreckt sich dabei eine Führungsnut 41 in der Oberfläche des Stützelementes 4. In diese greift der Führungsabschnitt 42 ein, welcher fest mit dem Teleskopelement 3 verbunden ist. Somit wird eine spielfreie und stabile Verdrehsicherung ausgestaltet, die auf das Teleskopelement 3 einwirkenden Kräfte werden optimal über die Verdrehsicherung an das Stützelement weitergeleitet und über das Befestigungsmittel 12 an den Fahrradrahmen 17 übertragen.

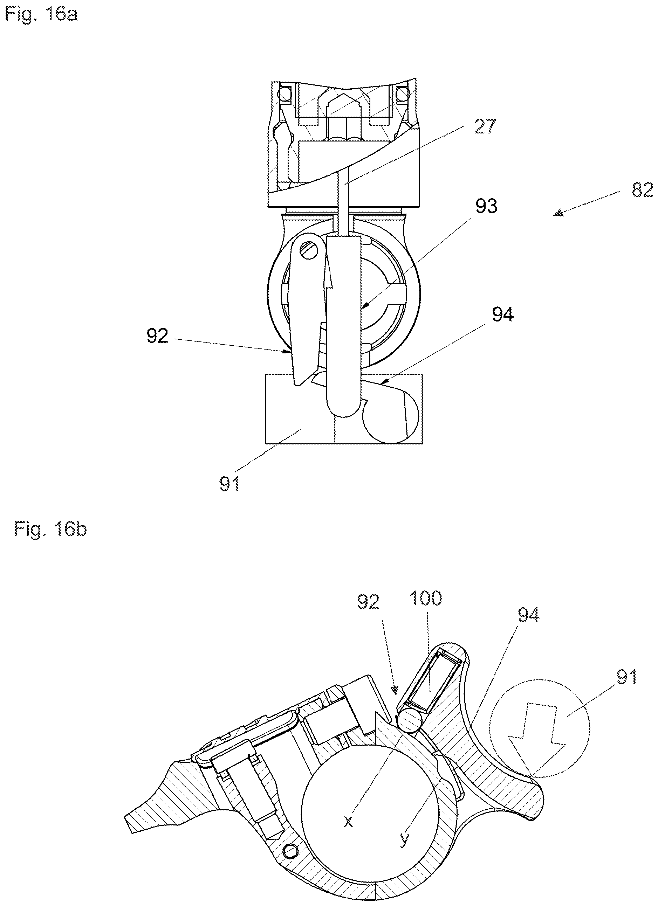

Fig. 16 a und 16b zeigt eine Remotesteuerung 82 mit Einrichtung zur schlagartigen Freigabe des Stellers 27. Zwischen einer Kraftquelle 91, zum Beispiel durch einen Daumen des Bedieners, einen Elektromotor oder einen Zylinder ausgebildet, besteht zum Lösen der Arretiervorrichtung 28 und dem Steller 27 eine Mechanik mit einer haltenden Komponente 92, welche vorzugweise so ausgeführt ist, dass der Steller 27 in der Lösestellung ohne ein weiteres Einwirken der Kraftquelle 91, gehalten wird. Erst durch Überschreiten einer gewissen Freigabekraft der haltenden Komponente 92, oder durch Lösen der haltenden Komponente 92 wird der Steller 27 schlagartig freigegeben. Somit wird das sofortige und gänzliche Einrasten der Rastelemente 28 in den vorgesehenen Rastnuten 80 gewährleistet und sehr geringe Rastabstände bei niedrigen Betriebs-Verschleißerscheinung werden erreicht.

In der Fig. 16 a wird beispielsweise ein Servomotor als Kraftquelle 91 verwendet. Dieser weist einen Betätigungshebel 94 auf, welcher mit der Klinke 92 in Wirkverbindung steht. Durch ein Zusammenwirken von Betätigungshebel 94 und Klinke 92 wird bei einer Bewegung des Servomotors ein schlagartiges Verschieben des Bolzen 93 erzielt, welcher mit dem Steller verbunden ist.

In der Fig. 16b wird eine Remotesteuerung 82 gezeigt, welche mittels einer externen Kraftquelle 91 wie z.B. von einem Daumen oder einem Zylinder betätigt wird. Diese wirkt auf den Betätigungshebel 94 ein, welcher durch ein Federelement 100 einer Klinke 92 in einer Schließlage x gehalten wird. Dieses Halten in einer bestimmten Lage x oder y kann beispielsweise durch einen Kugelsitz oder Rasten mit korrespondierendem Gegenstück (Kugel, Stößel) erfolgen. Überwiegt die Kraft der Kraftquelle 91 die Kraft des Federelementes 100 geht der Betätigungshebel 94 und somit auch der Steller schlagartig in eine Offenlage y über. Die Rastelemente 28 rasten somit schlagartig in die Rasterung 30 ein.

**Patentansprüche**

1. Positioniervorrichtung (40) für eine teleskopierbare Sattelstütze (1) eines Fahrradrahmens (17) umfassend:

   - ein rohrförmig ausgestaltetes Teleskopelement (3) mit einer Längsachse (LA) und einer an einer Innenfläche (I) des Teleskopelements (3) befindlichen Rasterung (30),
   - ein rohrförmig ausgestaltetes Stützelement (4), welches verdrehfest im Teleskopelement (3) verschiebbar gelagert ist,
   - zumindest eine Arretiervorrichtung (24) mit zumindest einem Rastelement (28), welches mit der Rasterung (30) in Eingriff bringbar ist, wobei die Rasterung (30) in der Innenfläche (I) des Teleskopelementes (3) angeordnete und in Umfangsrichtung begrenzte Radialnuten (80) aufweist, wobei das zumindest eine Rastelement (28) durch zumindest einen Steller (27) betätigbar ist, wobei zumindest ein Umlenker (33) die Bewegung des Stellers (27) entlang der Längsachse (LA) in eine Bewegung quer zur Längsachse (LA) umlenkt und die Bewegung an das - mit dem Umlenker (33) in Kontakt stehende - zumindest eine Rastelement (28) überträgt und dadurch das zumindest eine Rastelement (28) in Richtung radial zur Längsachse (LA) mit der Rasterung (30) in Kontakt oder außer Kontakt bringbar ist, wobei sich eine Stange (31) entlang der Längsachse (LA) durch die Positioniervorrichtung (40) erstreckt, wobei die Stange mit einem Kraftspeicher (26) verbunden ist und **dadurch gekennzeichnet, dass**
   an der Stange (31) eine Stangenarretierung (32) angeordnet ist, welche mit der Rasterung (30) in Eingriff bringbar ist, wobei die Stangenarretierung (32) durch eine Drehung um die Längsachse (LA) mit der Rasterung (30) in Eingriff bringbar ist und die Position der Stange (31) relativ zum Teleskopelement (3) entlang der Längsachse (LA) sperrt.

2. Positioniervorrichtung nach Anspruch 1, **dadurch gekennzeichnet, dass** die Arretiervorrichtung (24) fest am Stützelement (4) angeordnet ist.

3. Positioniervorrichtung nach einem der Ansprüche 1 oder 2, **dadurch gekennzeichnet, dass** das Teleskopelement (3) zumindest eine sich entlang der Längsachse (LA) erstreckende Führungsnut (41) aufweist, wobei zumindest ein an dem Stützelement (4) angeordnetes Führungselement (37) in die zumindest eine Führungsnut (41) eingreift und entlang der Führungsnut (41) beweglich gelagert ist.

4. Positioniervorrichtung nach Anspruch 1 bis 3, **dadurch gekennzeichnet, dass** das zumindest eine Rastelement (28) beweglich in einem Gehäuse (38) gelagert ist, wobei zwischen dem zumindest einen Rastelement (28) und dem Gehäuse (38) zumindest eine Rückstelleinheit (36) angeordnet ist, welche das zumindest eine Rastelement (28) in einer Schließstellung hält.

5. Positioniervorrichtung nach Anspruch 4, **dadurch gekennzeichnet, dass** bei Betätigung des zumindest einen Stellers (27) das zumindest eine Rastelement (28) entgegen die Rückstelleinheit (36) in eine Offenstellung verstellbar ist.

6. Positioniervorrichtung nach einem der Ansprüche 1 bis 5, **dadurch gekennzeichnet, dass** eine Anschlagmutter (97) abschnittsweise auf einem Gewinde auf der Anschlagspindel (43) und die Anschlagmutter (97) im Inneren einer Stange (31) gelagert sind, wobei die Stange (31) relativ zur Anschlagmutter (97) um die Längsachse (LA) verdrehsicher gelagert ist, wobei durch eine Drehbewegung der Stange (31) um die Längsachse (LA) die Position der Anschlagmutter (97) entlang der Längsachse (LA) und relativ zur Anschlagspindel (43) veränderbar ist.

7. Positioniervorrichtung nach einem der Ansprüche 1 bis 6, **dadurch gekennzeichnet, dass** über eine Positionserfassungseinrichtung (81) die Position des Stützelementes (4) relativ zum Teleskopelement (3) entlang der Längsachse (LA) erfassbar ist.

8. Positioniervorrichtung nach einem der Ansprüche 1 bis 7, **dadurch gekennzeichnet, dass** der Steller (27) durch eine Remotesteuerung (82) mechanisch, hydraulisch, pneumatisch oder elektrisch bewegbar ist.

9. Positioniervorrichtung nach einem der Ansprüche 1 bis 8, **dadurch gekennzeichnet, dass** zwischen dem Steller (27) und einer Kraftquelle (91) - wobei die Kraftquelle vorzugsweise durch einen mittels Daumen bedienbaren Hebel einer Remotesteuerung (82) ausgebildet wird - eine Mechanik mit einer haltenden Komponente (92) - vorzugsweise durch eine Klinke oder Rasten mit korrespondierendem Gegenstück ausgebildet - angeordnet ist, wobei der Steller (27) in einer Lösestellung ohne ein weiteres Einwirken der Kraftquelle (91) gehalten wird, wobei durch Überschreiten einer Freigabekraft der haltenden Komponente (92) oder durch Lösen der haltenden Komponente (92) der Steller (27) schlagartig rückgestellt wird,

10. Anordnung aus einer teleskopierbaren Sattelstütze (1) und einem Fahrradrahmen (17) mit einer Positioniervorrichtung nach einem der Ansprüche 1 bis 9, umfassend:

- ein rohrförmig ausgestaltetes Teleskopelement (3) zur Lagerung eines Sattels, wobei das Teleskopelement (3) entlang einer Längsachse (LA) eines Sattelrohres (16) des Fahrradrahmens (17) verschiebbar gelagert ist,
- ein rohrförmig ausgestaltetes Stützelement (4), welches im Teleskopelement (3) verschiebbar gelagert ist,

**dadurch gekennzeichnet, dass** das Stützelement (4) einen Befestigungsabschnitt (5) aufweist, der über ein quer zur Längsachse (LA) des Sattelrohres (16) einsetzbares Befestigungselement (12) mit dem Sattelrohr (16) verbindbar ist.

**Claims**

1. Positioning device (40) for a telescopic seat post (1) of a bicycle frame (17) including:

- a tubular telescoping element (3) having a longitudinal axis (LA) and a latching means (30) which is situated on an inside surface (I) of the telescoping element (3),
- a tubular supporting element (4) which is displaceably mounted in the telescoping element (3) so as to be non-rotatable,
- at least one locking device (24) having at least one latching element (28) which is movable into engagement with the latching means (30), wherein the latching means (30) comprises radial grooves (80) which are arranged in the inside surface (I) of the telescoping element (3) and are delimited in the circumferential direction,
wherein the at least one latching element (28) is actuatable by at least one actuator (27), wherein at least one redirecting means (33) redirects the movement of the actuator (27) along the longitudinal axis (LA) into a movement transversely with respect to the longitudinal axis (LA) and transmits the movement to the at least one latching element (28) - which is in contact with the redirecting means (33) - and, as a result, the at least one latching element (28) is movable in the direction radially with respect to the longitudinal axis (LA) into contact or out of contact with the latching means (30), wherein a rod (31) extends through the positioning device (40) along the longitudinal axis (LA), wherein the rod is connected to an energy store (26), **characterized in that**

a rod locking means (32), which is movable into engagement with the latching means (30), is arranged on the rod (31), wherein the rod locking means (32) is movable into engagement with the latching means (30) as a result of a rotation about the longitudinal axis (LA) and blocks the position of the rod (31) relative to the telescoping element (3) along the longitudinal axis (LA).

2. Positioning device as claimed in claim 1, **characterized in that** the locking device (24) is arranged fixedly on the supporting element (4).

3. Positioning device as claimed in either of claims 1 or 2, **characterized in that** the telescoping element (3) comprises at least one guide groove (41) which extends along the longitudinal axis (LA), wherein at least one guide element (37), which is arranged on the supporting element (4), engages in the at least one guide groove (41) and is mounted so as to be movable along the guide groove (41).

4. Positioning device as claimed in claims 1 to 3, **characterized in that** the at least one latching element (28) is mounted so as to be movable in a housing (38), wherein at least one resetting unit (36), which holds the at least one latching element (28) in a closed position, is arranged between the at least one latching element (28) and the housing (38).

5. Positioning device as claimed in claim 4, **characterized in that** when the at least one actuator (27) is actuated, the at least one latching element (28) is adjustable into an open position in opposition to the resetting unit (36).

6. Positioning device as claimed in one of claims 1 to 5, **characterized in that** a stop nut (97) is mounted in portions on a thread on the stop spindle (43) and the stop nut (97) is mounted in the interior of a rod (31), wherein the rod (31) is mounted so as to be non-rotatable about the longitudinal axis (LA) relative to the stop nut (97), wherein the position of the stop nut (97) along the longitudinal axis (LA) and relative to the stop spindle (43) is modifiable as a result of a rotational movement of the rod (31) about the longitudinal axis (LA).

7. Positioning device as claimed in one of claims 1 to 6, **characterized in that** the position of the supporting element (4) relative to the telescoping element (3) along the longitudinal axis (LA) is detectable by means of a position detecting device (81).

8. Positioning device as claimed in one of claims 1 to 7, **characterized in that** the actuator (27) is movable mechanically, hydraulically, pneumatically or electrically by means of a remote control means (82).

9. Positioning device as claimed in one of claims 1 to 8, **characterized in that** a mechanism with a retaining component (92) - preferably realized by a pawl or detent with a corresponding counterpart - is arranged between the actuator (27) and an energy source (91) - wherein the energy source is preferably realized by a thumb-controllable lever of a remote control means (82), wherein the actuator (27) is held in a release position without any further action of the energy source (91), wherein the actuator (27) is reset in an abrupt manner when a release force of the retaining component 92 is exceeded or when the retaining component (92) is released.

10. Arrangement having a bicycle frame (17) and a telescopic seat post (1) with a positioning device (40) as claimed in one of claims 1 to 9, including:

    - a tubular telescoping element (3) for mounting a saddle, wherein the telescoping element (3) is mounted so as to be displaceable along a longitudinal axis (LA) of a saddle tube (16) of the bicycle frame (17),
    - a tubular supporting element (4) which is mounted in the telescoping element (3) so as to be displaceable,

    **characterized in that** the supporting element (4) comprises a fastening portion (5) which is connectable to the saddle tube (16) by means of a fastening element (12) which is insertable transversely relative to the longitudinal axis (LA) of the saddle tube (16).

**Revendications**

1. Dispositif de positionnement (40) pour une tige de selle télescopique (1) d'un cadre de bicyclette (17), comprenant :

    - un élément télescopique (3) configuré de manière tubulaire avec un axe longitudinal (LA) et un système d'enclenchement (30) se trouvant sur une surface intérieure (I) de l'élément télescopique (3),
    - un élément d'appui (4) configuré de manière tubulaire, lequel est monté de manière à pouvoir coulisser de manière solidaire en rotation dans l'élément télescopique (3),
    - au moins un dispositif de blocage (24) avec au moins un élément d'enclenchement (28), lequel peut être amené en prise avec le système d'enclenchement (30),

dans lequel le système d'enclenchement (30) présente des rainures radiales (80) disposées dans la surface intérieure (I) de l'élément télescopique (3) et délimitées dans la direction périphérique, et dans lequel l'au moins un élément d'enclenchement (28) peut être actionné par au moins un actionneur (27), dans lequel au moins un élément de déviation (33) dévie le déplacement de l'actionneur (27) le long de l'axe longitudinal (LA) en un déplacement de manière transversale par rapport à l'axe longitudinal (LA) et transmet le déplacement à l'au moins un élément d'enclenchement (28) - situé en contact avec l'élément de déviation (33) - et l'au moins un élément d'enclenchement (28) peut être amené en contact ou hors contact avec le système d'enclenchement (30) dans une direction de manière radiale par rapport à l'axe longitudinal (LA), dans lequel une barre (31) s'étend le long de l'axe longitudinal (LA) à travers le dispositif de positionnement (40), dans lequel la barre est reliée à un accumulateur de force (26), **caractérisé en ce que**
est disposé sur la barre (31) un système de blocage de barre (32), lequel peut être amené en prise avec le système d'enclenchement (30), dans lequel le système de blocage de barre (32) peut être amené en prise avec le système d'enclenchement (30) par une rotation autour de l'axe longitudinal (LA) et verrouille la position de la barre (31) le long de l'axe longitudinal (LA) par rapport à l'élément télescopique (3).

2. Dispositif de positionnement selon la revendication 1, **caractérisé en ce que** le dispositif de blocage (24) est disposé de manière solidaire sur l'élément d'appui (4).

3. Dispositif de positionnement selon l'une quelconque des revendications 1 ou 2, **caractérisé en ce que** l'élément télescopique (3) présente au moins une rainure de guidage (41) s'étendant le long de l'axe longitudinal (LA), dans lequel au moins un élément de guidage (37) disposé sur l'élément d'appui (4) vient en prise avec l'au moins une rainure de guidage (41) et est monté de manière mobile le long de la rainure de guidage (41).

4. Dispositif de positionnement selon la revendication 1 à 3, **caractérisé en ce que** l'au moins un élément d'enclenchement (28) est monté de manière mobile dans un boîtier (38), dans lequel est disposée entre l'au moins un élément d'enclenchement (28) et le boîtier (38), au moins une unité de rappel (36), laquelle maintient l'au moins un élément d'enclenchement (28) dans une position de fermeture.

5. Dispositif de positionnement selon la revendication 4, **caractérisé en ce que** lors de l'actionnement de l'au moins un actionneur (27), l'au moins un élément d'enclenchement (28) peut être ajusté dans une position ouverte à l'encontre de l'unité de rappel (36).

6. Dispositif de positionnement selon l'une quelconque des revendications 1 à 5, **caractérisé en ce qu'**un écrou de butée (97) est monté par endroits sur un filetage sur la broche de butée (43) et l'écrou de butée (97) est monté à l'intérieur d'une barre (31), dans lequel la barre (31) est montée de manière bloquée en rotation autour de l'axe longitudinal (LA) par rapport à l'écrou de butée (97), dans lequel la position de l'écrou de butée (97) le long de l'axe longitudinal (LA) et par rapport à la broche de butée (43) peut être modifiée par un déplacement en rotation de la barre (31) autour de l'axe longitudinal (LA).

7. Dispositif de positionnement selon l'une quelconque des revendications 1 à 6, **caractérisé en ce que** la position de l'élément d'appui (4) par rapport à l'élément télescopique (3) le long de l'axe longitudinal (LA) peut être détectée par l'intermédiaire d'un système de détection de position (81).

8. Dispositif de positionnement selon l'une quelconque des revendications 1 à 7, **caractérisé en ce que** l'actionneur (27) peut être déplacé de manière mécanique, hydraulique, pneumatique ou électrique par une commande à distance (82).

9. Dispositif de positionnement selon l'une quelconque des revendications 1 à 8, **caractérisé en ce qu'**est disposé, entre l'actionneur (27) et une source de force (91) - dans lequel la source de force est réalisée de préférence par un levier d'une commande à distance (82) pouvant être utilisé avec le pouce -, un mécanisme avec une composante de maintien (92) - réalisé de préférence par un loquet ou un système d'enclenchement avec une contre-pièce correspondante -, dans lequel l'actionneur (27) est maintenu dans une position desserrée sans une autre action de la source de force (91), dans lequel l'actionneur (27) est ramené brutalement du fait du dépassement d'une force de libération de la composante de maintien (92) ou par desserrage de la composante de maintien (92).

10. Ensemble composé d'une tige de selle (1) télescopique et d'un cadre de bicyclette (17) avec un dispositif de positionnement selon l'une quelconque des revendications 1 à 9, comprenant :

- un élément télescopique (3) configuré de manière tubulaire destiné au support d'une selle, dans lequel l'élément télescopique (3) est monté de manière à pouvoir coulisser le long d'un axe longitudinal (LA) d'un tube de selle (16) du cadre de bicyclette (17),
- un élément d'appui (4) configuré de manière tubulaire, lequel est monté de manière à pouvoir coulisser dans l'élément télescopique (3),

**caractérisé en ce que** l'élément d'appui (4) présente une section de fixation (5), qui peut être reliée au tube de selle (16) par l'intermédiaire d'un élément de fixation (12) pouvant être inséré de manière transversale par rapport à l'axe longitudinal (LA) du tube de selle (16).

**EP 3 325 334 B1**

Fig. 1

LA

Fig. 2

LA

1

3

99 — 32

I

30

31

3 — 81

28

40

24

26

4

5

80

32

30

8

I

24

40

28

27

26

98

4

5

27

98

13

Fig. 3a

Fig. 3b

Fig. 4

Fig 5a   B-B

Fig 5b   C-C

Fig. 6a

Dn1

L3

L2

28

L1

S1

85

Rs1

80

3

30

LA

Fig. 6b

3

80

Lq

Dn2

41

Fig. 7b

99

32

31

37

24

B

B

97

40

3

86

43

4

26

87

LA

Fig. 7a  B-B

43

3

31

97

Fig. 8

Fig. 9a

Fig. 9b

Fig. 10

Fig. 11

Fig. 12

Fig. 13

Fig. 14

Fig. 15

EP 3 325 334 B1

Fig. 16a

Fig. 16b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20090324327 A
- EP 2574799 A1
- EP 2284068 A2
- US 2014112703 A1
- US 2011204201 A1